# EUROPEAN PATENT APPLICATION

(11) **EP 3 366 549 A1**
(43) Date of publication of application: **29.08.2018**
(21) Application number: 16857213.9
(22) Date of filing: 16.09.2016
(51) Int. Cl.: B62D 6/00, B62D 113/00, B62D 119/00

(54) **ELECTRIC POWER STEERING DEVICE**

(30) Priority: 21.10.2015 JP 2015207402
(71) Applicant: KYB Corporation, Tokyo 105-6111 (JP)
(72) Inventor: MIYATANI, Osamu, Tokyo 105-6111 (JP); ISHIKAWA, Hisazumi, Tokyo 105-6111 (JP)
(74) Representative: Grünecker Patent- und Rechtsanwälte PartG mbB
(86) International application number: PCT/JP2016/077588
(87) International publication number: WO 2017/068895

(57) **Abstract**

An electric power steering device (100) includes an electric motor (10) configured to selectively perform steering assistance based on a detection result of a torque sensor (12) and automatic steering based on information outside a vehicle, a breakdown determination unit (32) configured to determine the breakdown of the torque sensor (12), and an intervention determination unit (33) configured to determine a steering intervention operation by the driver when the torque sensor (12) breaks down during the automatic steering. The automatic steering is released when the intervention determination unit (33) determines that the steering intervention operation has been performed.

## Description

### TECHNICAL FIELD

The present invention relates to an electric power steering device.

### BACKGROUND ART

JP2015-20604A discloses a conventional electric power steering device in which a transition is made to an assist control for assisting a steering wheel operation by a driver by a motor when an intervention operation by the driver is detected during a target following control for realizing automatic steering along a target course set on a traveling lane by the motor.

### SUMMARY OF INVENTION

In the electric power steering device described in JP2015-20604A, the intervention operation by the driver is judged on the basis of a steering torque detected by a torque sensor. Thus, if the torque sensor breaks down during the target following control, it is thought to forcibly cancel the target following control. However, since it is dangerous to forcibly cancel the target following control without the intension of the driver when the torque sensor breaks down, for example, while a lane keeping control is executed by the target following control, it is safer to continue the target following control even if the torque sensor breaks down during the target following control.

The present invention aims to provide an electric power steering device capable of continuing automatic steering even at the time of breakdown of a torque sensor.

According to one aspect of the present invention, an electric power steering device includes: a steering shaft configured to rotate according to a steering operation by a driver; a torsion bar constituting a part of the steering shaft; a torque sensor configured to detect a steering torque acting on the torsion bar; an electric motor configured to selectively perform steering assistance based on a detection result of the torque sensor and automatic steering based on information outside a vehicle; a breakdown determination unit configured to determine the breakdown of the torque sensor; and an intervention determination unit configured to determine a steering intervention operation by the driver when the torque sensor breaks down during the automatic steering. The automatic steering is released when the intervention determination unit determines that the steering intervention operation has been performed.

### BRIEF DESCRIPTION OF DRAWINGS

FIG. 1 is a configuration diagram of an electric power steering device according to a first embodiment of the present invention,
FIG. 2 is a control block diagram of the electric power steering device according to the first embodiment of the present invention,
FIG. 3 is a control block diagram of an electric power steering device according to a second embodiment of the present invention,
FIG. 4 is a graph showing a relationship between a steering angle and a steering torque,
FIG. 5 is a map showing a relationship between a steering angular velocity and a correction coefficient,
FIG. 6 is a graph showing a hysteresis of an estimated steering torque,
FIG. 7 is a map of a hysteresis correction value, and
FIG. 8 is a flow chart showing a procedure of determining whether or not to correct the estimated steering torque by the hysteresis correction value.

### DESCRIPTION OF EMBODIMENTS

Hereinafter, embodiments of the present invention are described with reference to the drawings.

### <First Embodiment>

An electric power steering device 100 according to a first embodiment of the present invention is described below.

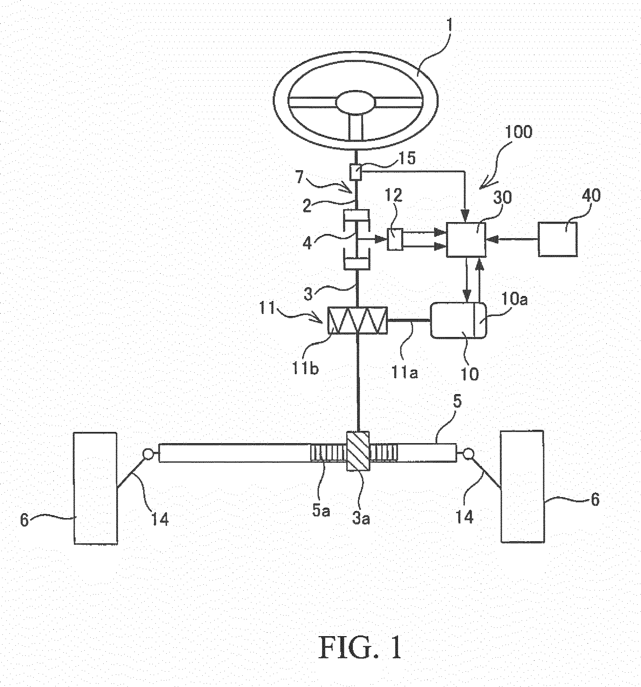

As shown in FIG. 1, the electric power steering device 100 includes a input shaft 2 that rotates by the operation of a steering wheel 1 by a driver (hereinafter, referred to as a "steering operation"), an output shaft 3 linked to a rack shaft 5 that turns wheels 6, and a torsion bar 4 that couples the input shaft 2 and the output shaft 3. A steering shaft 7 is constituted by the input shaft 2, the output shaft 3 and the torsion bar 4.

A pinion gear 3a to be meshed with a rack gear 5a formed on the rack shaft 5 is formed on a lower part of the output shaft 3. When the steering wheel 1 is steered, the steering shaft 7 rotates, the rotation thereof is translated into a linear motion of the rack shaft 5 by the pinion gear 3a and the rack gear 5a and the wheels 6 are turned via knuckle arms 14.

The electric power steering device 100 further includes an electric motor 10 serving as a power source for assisting the steering of the steering wheel 1 by the driver, a speed reducer 11 that decelerates and transmit the rotation of the electric motor 10 to the steering shaft 7, a torque sensor 12 that detects a steering torque acting on the torsion bar 4 by relative rotation of the input shaft 2 and the output shaft 3 associated with the steering operation by the driver and a controller 30 that controls the electric motor 10.

The electric motor 10 is provided with a motor rotation angle sensor 10a that obtains a rotation angle of the electric motor 10. The motor rotation angle sensor 10a is constituted by a resolver.

The speed reducer 11 is composed of a worm shaft 11a coupled to an output shaft of the electric motor 10 and a worm wheel 11b coupled to the output shaft 3 and meshed with the worm shaft 11a. A torque output by the electric motor 10 is transmitted to the worm wheel 11b from the worm shaft 11a and applied to the output shaft 3.

A steering torque applied to the input shaft 2 according to the steering operation by the driver is detected by the torque sensor 12, and the torque sensor 12 outputs a voltage signal corresponding to that steering torque to the controller 30. The controller 30 calculates the torque output by the electric motor 10 on the basis of the voltage signal from the torque sensor 12 and controls the drive of the electric motor 10 to generate that torque. In this way, the electric power steering device 100 detects the steering torque applied to the input shaft 2 by the torque sensor 12 and assists the steering operation of the driver by controlling the drive of the electric motor 10 on the basis of that detection result by the controller 30.

The torque sensor 12 is connected to the controller 30 by two systems including a main system and a sub-system.

The input shaft 2 is provided with a steering angle sensor 15 serving as a steering angle obtaining unit that obtains a steering angle (absolute steering angle), which is a rotation angle of the steering wheel 1. Since a rotation angle of the input shaft 2 and the steering angle of the steering wheel 1 are equal, the steering angle of the steering wheel 1 is obtained by detecting the rotation angle of the input shaft 2 by the steering angle sensor 15. A detection result of the steering angle sensor 15 is output to the controller 30.

Although not shown, the steering angle sensor 15 includes a center gear that rotates integrally with the input shaft 2 and two outer gears meshed with the center gear, and calculates a rotation angle of the center gear, i.e. the rotation angle of the input shaft 2 on the basis of a magnetic flux change according to the rotation of the two outer gears.

The controller 30 includes a CPU that controls the operation of the electric motor 10, a ROM storing a control program, set values and the like necessary for a processing operation of the CPU and a RAM that temporarily stores information detected by various sensors such as the torque sensor 12 and the steering angle sensor 15.

The electric motor 10 is capable of automatic steering on the basis of information outside the vehicle without depending on the steering operation of the driver besides assisting the steering operation by the driver on the basis of the detection result of the torque sensor 12 as described above. As just described, the electric motor 10 selectively performs steering assistance based on the detection result of the torque sensor 12 and the automatic steering based on the information outside the vehicle.

The automatic steering is performed on the basis of a command signal from an automatic driving system 40 of the vehicle. Specifically, the automatic driving system 40 detects a boundary line (white line) between lanes during travel as the information outside the vehicle, calculates a target steering angle necessary for the vehicle to maintain the travel in the lane, and outputs that target steering angle to the controller 30. The controller 30 controls the drive of the electric motor 10 such that the steering angle of the steering wheel 1 matches the target steering angle. Specifically, the controller 30 controls the drive of the electric motor 10 such that the steering angle obtained by the steering angle sensor 15 matches the target steering angle.

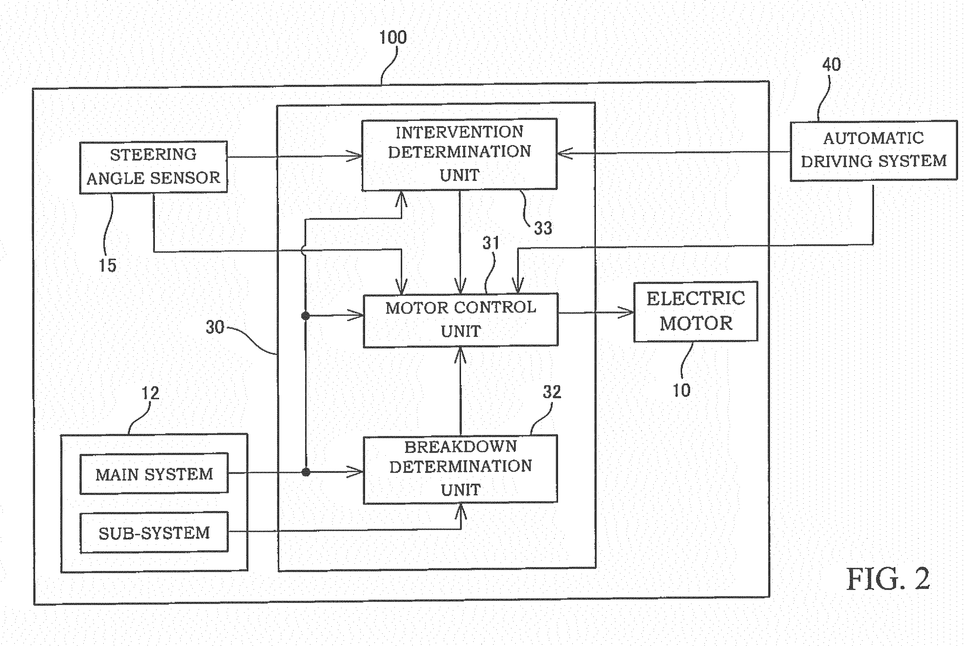

Next, the controller 30 is described with reference to FIG. 2. FIG. 2 is a control block diagram of the electric power steering device 100.

The controller 30 includes a motor control unit 31 that controls the drive of the electric motor 10, a breakdown determination unit 32 that determines the breakdown of the torque sensor 12, and an intervention determination unit 33 that determines a steering intervention operation by the driver during the automatic steering.

The motor control unit 31 selectively executes an assist control for controlling the drive of the electric motor 10 on the basis of the detection result of the torque sensor 12 and an automatic steering control for controlling the drive of the electric motor 10 on the basis of a command signal from the automatic driving system 40.

A switch from manual steering to the automatic steering by the driver is made selecting an automatic driving mode through an operation by the driver. On the other hand, a switch from the automatic steering to the manual steering is made when the intervention determination unit 33 detects the intervention of the steering operation by the driver.

When the torque sensor 12 is in a normal state, a voltage signal output from the main system is used in the assist control of the electric motor 10. A voltage signal output from the sub-system is not used in the control of the electric motor 10, but used to determine the breakdown of the torque sensor 12.

The breakdown determination unit 32 compares an output voltage output from the main system and an output voltage output from the sub-system and determines that the torque sensor 12 is broken down if a difference between these output voltages is equal to or larger than a predetermined allowable tolerance.

The intervention determination unit 33 determines the steering intervention operation by the driver on the basis of the detection result of the torque sensor 12 when the torque sensor 12 is in a normal state. Specifically, the intervention determination unit 33 determines that the steering intervention operation has been performed by the driver if the steering torque detected by the main system becomes equal to or larger than a predetermined value. That determination result is output to the motor control unit 31 and the motor control unit 31 switches a control method for the electric motor 10 from the automatic steering control to the assist control.

If the breakdown of the torque sensor 12 is determined by the breakdown determination unit 32, the intervention determination unit 33 cannot determine the steering intervention operation on the basis of the detection result of the torque sensor 12. Thus, the intervention determination unit 33 stops the determination of the steering intervention operation on the basis of the detection result of the torque sensor 12 if the breakdown of the torque sensor 12 is determined by the breakdown determination unit 32. Accordingly, the intervention determination unit 33 includes means for determining the steering intervention operation when the torque sensor 12 breaks down during the automatic steering.

The means for determining the steering intervention operation by the driver at the time of breakdown of the torque sensor 12 is described below.

The intervention determination unit 33 determines the steering intervention operation on the basis of the target steering angle output from the automatic driving system 40. Specifically, it is determined that the steering intervention operation has been performed if a deviation between the target steering angle of the automatic steering and the steering angle obtained by the steering angle sensor 15 becomes equal to or larger than a predetermined value.

If the steering wheel 1 is steered by the intension of the driver during the automatic steering, i.e. if the steering intervention operation is performed to the automatic steering control by the driver, a deviation between the target steering angle of the automatic steering and an actual steering angle temporarily becomes larger. Thus, the steering intervention operation can be determined by monitoring the deviation between the target steering angle of the automatic steering and the steering angle obtained by the steering angle sensor 15. A threshold value (predetermined value) of the deviation to determine the steering intervention operation may be set at such a value to avoid the determination of the steering intervention operation when the driver touches the steering wheel 1 by mistake during the automatic steering.

Other means for determining the steering intervention operation by the driver at the time of breakdown of the torque sensor 12 are described.
(1) The intervention determination unit 33 may determine the steering intervention operation on the basis of a change amount of the target steering angle of the automatic steering. Specifically, it is determined that the steering intervention operation has been performed if the change amount of the target steering angle of the automatic steering becomes equal to or larger than a predetermined specific change amount.
   If the steering wheel 1 is steered by the intension of the driver during the automatic steering, the deviation between the target steering angle of the automatic steering and the actual steering angle temporarily becomes larger. Since the motor control unit 31 controls the drive of the electric motor 10 to reduce that deviation, the change amount of the target steering angle of the automatic steering temporarily becomes larger. Thus, the steering intervention operation can be determined by monitoring the change amount of the target steering angle of the automatic steering. A threshold value (predetermined value) of the change amount of the target steering angle to determine the steering intervention operation may be set at such a value to avoid the determination of the steering intervention operation when the driver touches the steering wheel 1 by mistake during the automatic steering.
(2) The intervention determination unit 33 may determine the steering intervention operation on the basis of a change amount of a target control current for controlling the drive of the electric motor 10. Specifically, it is determined that the steering intervention operation has been performed if the change amount of the target control current of the electric motor 10 becomes equal to or larger than a predetermined specific change amount during the automatic steering.

If the steering wheel 1 is steered by the intension of the driver during the automatic steering, the deviation between the target steering angle of the automatic steering and the actual steering angle temporarily becomes larger. Since the motor control unit 31 controls the drive of the electric motor 10 to reduce that deviation, the change amount of the target control current of the electric motor 10 temporarily becomes larger. Thus, the steering intervention operation can be determined by monitoring the change amount of the target control current of the electric motor 10. A threshold value (predetermined value) of the change amount of the target control current of the electric motor 10 to determine the steering intervention operation may be set at such a value to avoid the determination of the steering intervention operation when the driver touches the steering wheel 1 by mistake during the automatic steering.

The intervention determination unit 33 monitors the change amount of the target control current of the electric motor 10 by receiving a signal of the target control current of the electric motor 10 from the motor control unit 31.

As described above, the intervention determination unit 33 determines the steering intervention operation on the basis of a target control value of the automatic steering at the time of breakdown of the torque sensor 12.

Next, a control of the electric power steering device 100 is described.

At the time of the manual steering by the driver, motor control unit 31 executes assist control for controlling the drive of the electric motor 10 on the basis of the detection result of the torque sensor 12.

When the automatic driving mode is selected by the operation of the driver, a switch is made to the automatic steering and the motor control unit 31 executes the automatic steering control for controlling the drive of the electric motor 10 such that the steering angle obtained by the steering angle sensor 15 matches the target steering angle output from the automatic driving system 40.

If the steering wheel 1 is steered by the driver during the automatic steering and the steering torque detected by the torque sensor 12 becomes equal to or larger than the predetermined value, the intervention determination unit 33 determines that the steering intervention operation has been performed by the driver. This causes the motor control unit 31 to switch the control method for the electric motor 10 from the automatic steering control to the assist control.

If the breakdown of the torque sensor 12 is determined by the breakdown determination unit 32 during the automatic steering, the intervention determination unit 33 stops the determination of the steering intervention operation based on the detection result of the torque sensor 12 and determines the steering intervention operation on the basis of the target control value of the automatic steering. Since the determination of the steering intervention operation is possible even if the torque sensor 12 breaks down during the automatic steering as just described, the automatic steering can be continued.

If the automatic steering is suddenly released, for example, when the torque sensor 12 breaks down while the vehicle is automatically steered to maintain the travel in the lane (lane keeping control), the assist control based on the detection result of the torque sensor 12 cannot be executed. Thus, the vehicle may deviate from the lane. However, since the automatic steering is continued even if the torque sensor 12 breaks down during the lane keeping control in the present embodiment, a safe operation is maintained.

Accordingly, even if the torque sensor 12 breaks down during the automatic steering, the automatic steering is continued and the safe operation is maintained. Thus, the vehicle can be stopped at a safe place after the automatic steering is released by the intention of the driver.

According to the above first embodiment, the following effects are exhibited.

Since the steering intervention operation by the driver is determined by the intervention determination unit 33 even if the torque sensor 12 breaks down during the automatic steering, the automatic steering can be continued. Thus, the safe operation is maintained since the automatic steering is continued even if the torque sensor 12 breaks down during the lane keeping control.

Further, since the intervention determination unit 33 determines the steering intervention operation on the basis of the target control value of the automatic steering at the time of breakdown of the torque sensor 12, the steering intervention operation can be accurately determined.

Further, in the case of a system for determining an intervention operation by a driver on the basis of a detection result of a torque sensor even if the torque sensor 12 breaks down, the number of the torque sensors needs to be increased. In this case, cost increases and the layout of the torque sensors in the vehicle is also disadvantageous. In contrast, in the present embodiment, the intervention operation by the driver when the torque sensor 12 breaks down during the automatic steering can be determined by an existing facility without increasing the number of the torque sensors.

### <Second Embodiment>

An electric power steering device 200 according to a second embodiment of the present invention is described below. Points of difference from the electric power steering device 100 according to the above first embodiment are described below, and the same components as those of the electric power steering device 100 are denoted by the same reference signs and not described.

The electric power steering device 200 differs from the electric power steering device 100 in a determination method in an intervention determination unit 33 performed at the time of breakdown of a torque sensor 12. Further, the electric power steering device 200 differs from the electric power steering device 100 also in that an assist control based on an estimated steering torque is executed after the torque sensor 12 breaks down during automatic steering and the automatic steering is released by the intention of a driver. These points are described in detail below.

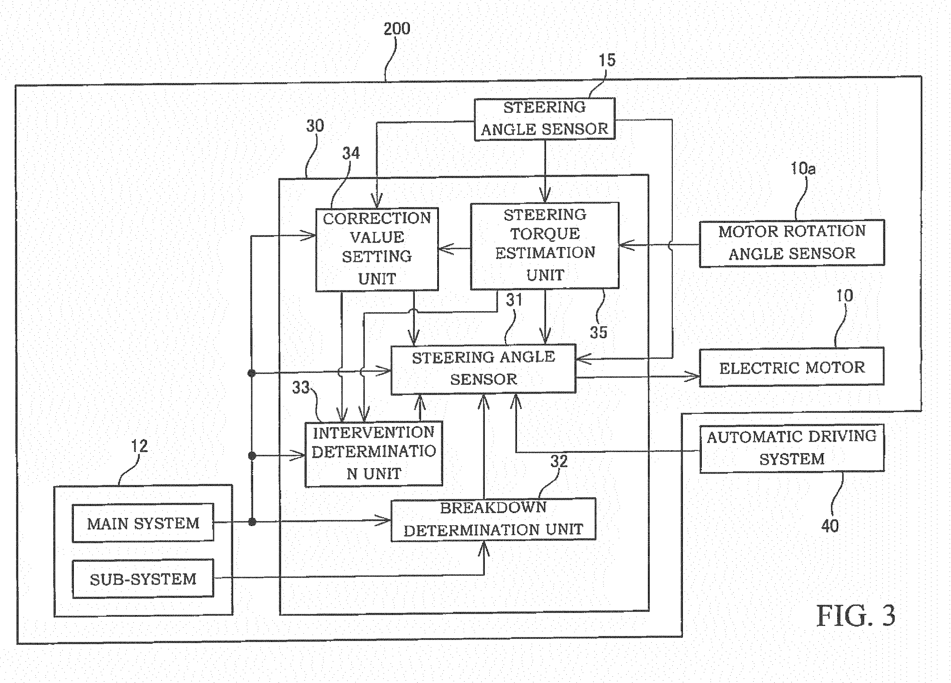

As shown in FIG. 3, a controller 30 of the electric power steering device 200 further includes a steering torque estimation unit 35 that estimates a steering torque applied to an input shaft 2 according to a steering operation by the driver and a correction value setting unit 34 that sets a correction value of the estimated steering torque estimated by the steering torque estimation unit 35 when the torque sensor 12 is in a normal state.

At the time of manual steering by the driver, a motor control unit 31 controls the drive of an electric motor 10 on the basis of a detection result of the torque sensor 12 in the normal state of the torque sensor 12 while controlling the drive of the electric motor 10 on the basis of the estimated steering torque estimated by the steering torque estimation unit 35 and the correction value set by the correction value setting unit 34 at the time of breakdown of the torque sensor 12.

The steering torque estimation unit 35 calculates the estimated steering torque on the basis of a steering angle obtained by a steering angle sensor 15 and a motor rotation angle obtained by a motor rotation angle sensor 10a. When a steering wheel 1 is steered by the driver, an angle difference between the steering angle and the motor rotation angle is caused due to the twist of a torsion bar 4. Thus, the estimated steering torque can be calculated on the basis of that angle difference. Specifically, the estimated steering torque is calculated on the basis of a spring constant of the torsion bar 4 and a speed reduction ratio of a speed reducer 11 in addition to the steering angle and the motor rotation angle.

However, the estimation accuracy of the estimated steering torque estimated by the steering torque estimation unit 35 cannot be said to be high due to the detection accuracy of the steering angle sensor 15 and the motor rotation angle sensor 10a, a difference between periods of inputting detection signals detected by the steering angle sensor 15 and the motor rotation angle sensor 10a to the steering torque estimation unit 35, an individual difference of the speed reduction ratio of the speed reducer 11 and the like. Thus, even if the drive of the electric motor 10 is controlled on the basis of the estimated steering torque estimated by the steering torque estimation unit 35 at the time of breakdown of the torque sensor 12, a good steering feeling cannot be obtained.

Accordingly, at the time of breakdown of the torque sensor 12, the motor control unit 31 calculates a corrected estimated steering torque by correcting the estimated steering torque estimated by the steering torque estimation unit 35 using the correction value set by the correction value setting unit 34, and controls the drive of the electric motor 10 on the basis of that corrected estimated steering torque.

A method for setting the correction value by the correction value setting unit 34 is described in detail below.

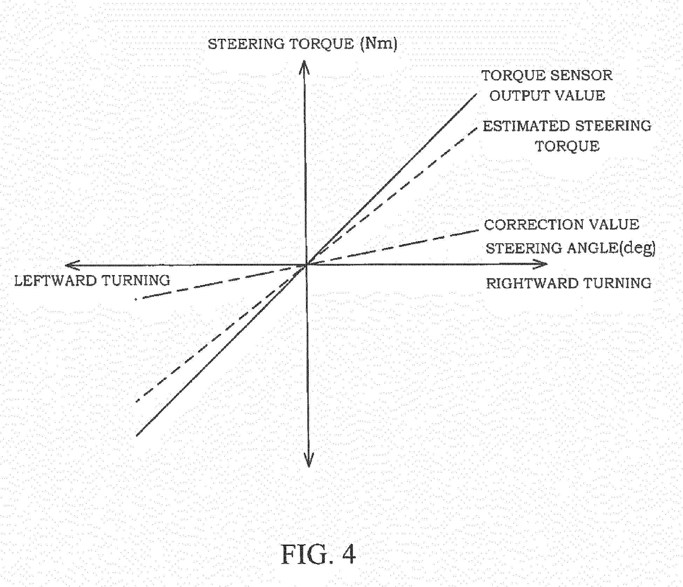

The correction value setting unit 34 compares the steering torque detected by the torque sensor 12 and the estimated steering torque estimated by the steering torque estimation unit 35 and sets the correction value when the torque sensor 12 is in the normal state. This is specifically described with reference to FIG. 4.

FIG. 4 is a graph showing a relationship between the steering angle and the steering torque, wherein a solid line represents the steering torque output by the torque sensor 12, a broken line represents the estimated steering torque estimated by the steering torque estimation unit 35 and a dashed-dotted line represents the correction value set by the correction value setting unit 34. As shown in FIG. 4, when the torque sensor 12 is in the normal state, the steering torque detected by the torque sensor 12 and the estimated steering torque estimated by the steering torque estimation unit 35 are sampled according to the steering angle. It should be noted that although the torque sensor output value and the estimated steering torque are shown by straight lines for the sake of convenience in FIG. 4, the torque sensor output value and the estimated steering torque are not necessarily limited to exhibit linear characteristics.

As shown in FIG. 4, since the estimated steering torque estimated by the steering torque estimation unit 35 is not high in estimation accuracy for the aforementioned reason, the estimated steering torque does not match the steering torque detected by the torque sensor 12. Accordingly, the correction value setting unit 34 sets the correction value of the estimated steering torque such that the estimated steering torque approaches, preferably matches, the steering torque detected by the torque sensor 12. That is, the correction value is set such that a value obtained by adding or subtracting the correction value to or from the estimated steering torque matches the steering torque detected by the torque sensor 12.

The sampling of the torque sensor output value and the estimated steering torque and the setting of the correction value are constantly performed when the torque sensor 12 is in the normal state. By constantly performing the sampling of the torque sensor output value and the estimated steering torque when the torque sensor 12 is in the normal state, the correction value can be more approximated to a correct value.

Since the relationship between the steering angle and the steering torque changes according to a vehicle speed, a relationship between the torque sensor output value and the estimated steering torque also changes according to the vehicle speed. Accordingly, the sampling of the torque sensor output value and the estimated steering torque and the setting of the correction value are desirably performed for each predetermined vehicle speed range to set a more accurate correction value. That is, a characteristic diagram shown in FIG. 4 is desirably prepared for each predetermined vehicle speed range. For example, a characteristic diagram is prepared for each of a low speed range where the vehicle speed is 0 to 30 km/h, a medium speed range where the vehicle speed is 30 to 60 km/h and a high speed range where the vehicle speed is 60 km/h or higher. As just described, the correction value is desirably set according to the vehicle speed.

The correction value of the estimated steering torque is set as described above. If the breakdown of the torque sensor 12 is determined by a breakdown determination unit 32, the assist control by the motor control unit 31 is switched from an assist control for controlling the electric motor 10 on the basis of the detection result of the torque sensor 12 to an assist control for controlling the electric motor 10 on the basis of the estimated steering torque estimated by the steering torque estimation unit 35.

Specifically, the motor control unit 31 obtains the estimated steering torque from the steering torque estimation unit 35 and obtains the correction value (see FIG. 4) corresponding to the current steering angle from the correction value setting unit 34. Then, the corrected estimated steering torque is calculated by adding or subtracting the correction value to or from the estimated steering torque and the drive of the electric motor 10 is controlled on the basis of the corrected estimated steering torque. If the correction value is set according to the vehicle speed, the motor control unit 31 obtains the correction value corresponding to the current vehicle speed on the basis of a detection result of a vehicle speed sensor (not shown).

Since the correction value is calculated such that the estimated steering torque matches the steering torque detected by the torque sensor 12 when the torque sensor 12 is in the normal state, the corrected estimated steering torque corrected by the correction value substantially matches the steering torque detected by the torque sensor 12. Thus, the steering feeling is not degraded even if the torque sensor 12 breaks down.

As described above, the steering feeling is not degraded and the travel of a vehicle can be continued even if the torque sensor 12 breaks down during the travel of the vehicle.

It should be noted that if the torque sensor output value and the estimated steering torque have linear characteristics as shown in FIG. 4, the correction value needs not be set according to the steering angle as shown in FIG. 4 and may be a constant value regardless of the steering angle. In such a case, the corrected estimated steering torque is calculated by multiplying the estimated steering torque by the correction value.

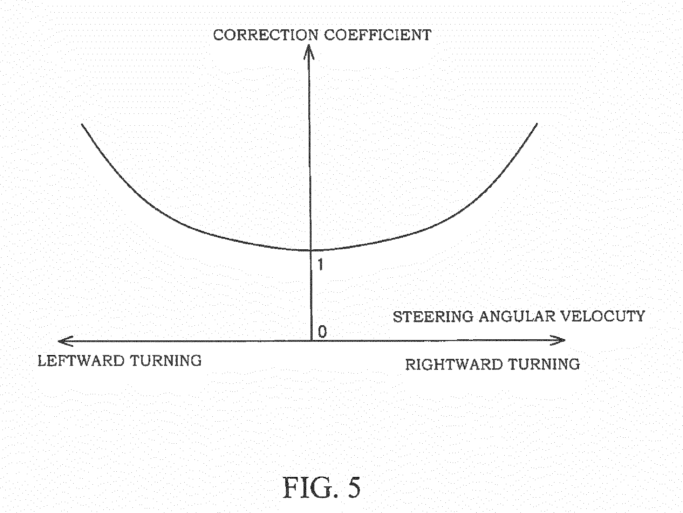

The relationship between the output value of the torque sensor 12 and the estimated steering torque changes according to a steering angle velocity. Thus, to enhance the accuracy of the corrected estimated steering torque, it is desirable to set a correction coefficient corresponding to the steering angular velocity in advance as shown in FIG. 5 and further correct the corrected estimated steering torque using that correction coefficient in addition to the correction of the estimated steering torque as described above. Specifically, the motor control unit 31 obtains the steering angular velocity calculated on the basis of the detection result of the steering angle sensor 15 and obtains the correction coefficient corresponding to the current steering angular velocity by reference to a map shown in FIG. 5. Then, the corrected estimated steering torque is multiplied by that correction coefficient to further correct the corrected estimated steering torque.

As described above, at the time of breakdown of the torque sensor 12, the corrected estimated steering torque is calculated on the basis of the estimated steering torque calculated by the steering torque estimation unit 35 and the correction value set by the correction value setting unit 34, and the motor control unit 31 controls the drive of the electric motor 10 on the basis of the corrected estimated steering torque. Since the corrected estimated steering torque substantially matches the steering torque detected by the torque sensor 12, a steering intervention operation when the torque sensor 12 breaks down during the automatic steering can be determined on the basis of the corrected estimated steering torque. As just described, if the breakdown of the torque sensor 12 is determined by the breakdown determination unit 32 during the automatic steering, the intervention determination unit 33 stops the determination of the steering intervention operation based on the detection result of the torque sensor 12 and determines the steering intervention operation on the basis of the corrected estimated steering torque. Specifically, the intervention determination unit 33 calculates the corrected estimated steering torque on the basis of the estimated steering torque calculated by the steering torque estimation unit 35 and the correction value set by the correction value setting unit 34, and determines that the steering intervention operation has been performed by the driver if that corrected estimated steering torque becomes equal to or larger than a predetermined value. That determination result is output to the motor control unit 31, and the motor control unit 31 switches the control method for the electric motor 10 from the automatic steering control to the assist control.

According to the above second embodiment, the following effects are exhibited.

The intervention determination unit 33 determines the steering intervention operation on the basis of the corrected estimated steering torque at the time of breakdown of the torque sensor 12. Since that corrected estimated steering torque substantially matches the steering torque detected by the torque sensor 12, the steering intervention operation at the time of breakdown of the torque sensor 12 can be accurately determined. Further, even after the steering intervention operation is determined by the intervention determination unit 33 and the automatic steering is released at the time of breakdown of the torque sensor 12, the assist control based on the corrected estimated steering torque is executed. Thus, a safe operation of the vehicle can be continued.

### <Third Embodiment>

Next, an electric power steering device according to a third embodiment of the present invention is described below. Points of difference from the electric power steering device 200 according to the above second embodiment are described below, and the same components as those of the electric power steering device 200 are denoted by the same reference signs and not described.

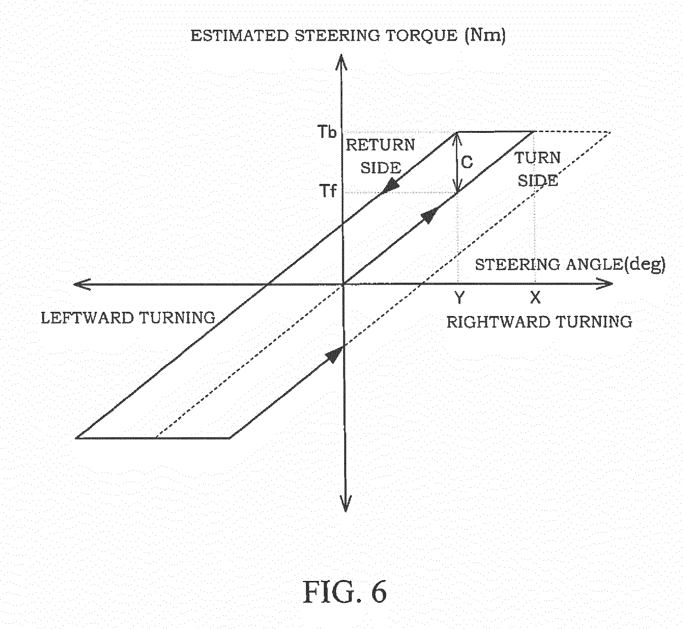

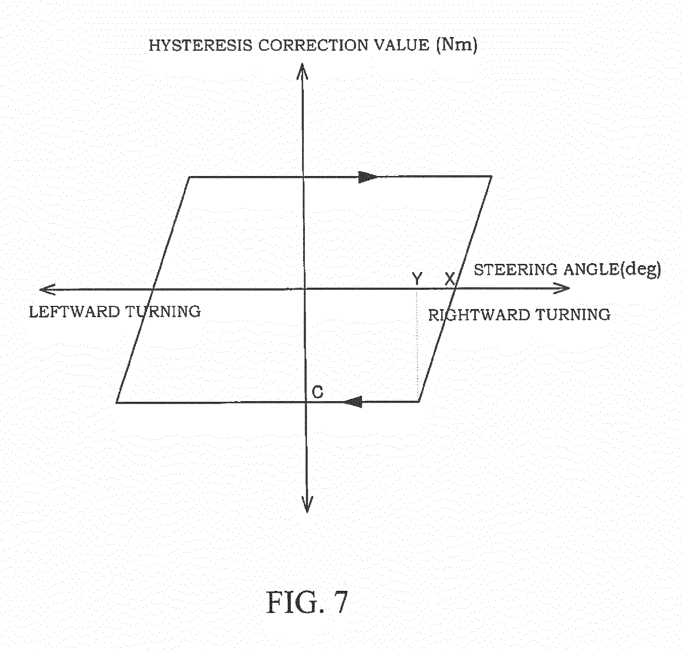

As shown in FIG. 6, an estimated steering torque estimated on the basis of a steering angle obtained by a steering angle sensor 15 and a motor rotation angle obtained by a motor rotation angle sensor 10a is a characteristic with a hysteresis. That is, the hysteresis occurs after a point of time when a steering wheel 1 is steered from a neutral position to change a steering direction (point of time of a steering angle X in FIG. 6). As just described, an estimated steering torque estimated by a steering torque estimation unit 35 is poor in accuracy due to the hysteresis as compared to an output value of a torque sensor 12. Accordingly, in a correction value setting unit 34, a hysteresis correction value (see FIG. 7) for correcting the hysteresis of the estimated steering torque is also set in addition to the correction value shown in FIG. 4. The hysteresis correction value is described in detail below.

The hysteresis correction value shown in FIG. 7 is set such that an estimated steering torque in returning the steering wheel 1 matches an estimated steering torque when the steering wheel 1 is turned from the neutral position. That is, the hysteresis correction value is set such that a value obtained by adding or subtracting the hysteresis correction value to or from the estimated steering torque on a return side matches an estimated steering torque on a turn side. Specifically, as shown in FIG. 6, there is a deviation of a torque value C between an estimated steering torque Tf on the turn side and an estimated steering torque Tb on the return side at a steering angle Y. Thus, the hysteresis correction value is set at C at the steering angle Y as shown in FIG. 7.

The sampling of the estimated steering torque and the setting of the hysteresis correction value are constantly performed when the torque sensor 12 is in a normal state. By constantly performing the sampling of the estimated steering torque when the torque sensor 12 is in the normal state, the hysteresis correction value can be more approximated to a correct value.

Since the size of the hysteresis changes according to a vehicle speed, the sampling of the estimated steering torque and the setting of the hysteresis correction value are desirably performed for each predetermined vehicle speed range to set a more accurate hysteresis correction value. That is, a map of the hysteresis correction value shown in FIG. 7 is desirably prepared for each predetermined vehicle speed range.

If the breakdown of the torque sensor 12 is determined by a breakdown determination unit 32, a motor control unit 31 obtains the estimated steering torque from the steering torque estimation unit 35 and obtains the correction value (see FIG. 4) and the hysteresis correction value (see FIG. 7) corresponding to the current steering angle from the correction value setting unit 34. Then, the corrected steering torque is calculated by adding or subtracting the correction value shown in FIG. 4 and the hysteresis correction value shown in FIG. 7 to or from the estimated steering torque and the drive of an electric motor 10 is controlled on the basis of that corrected steering torque.

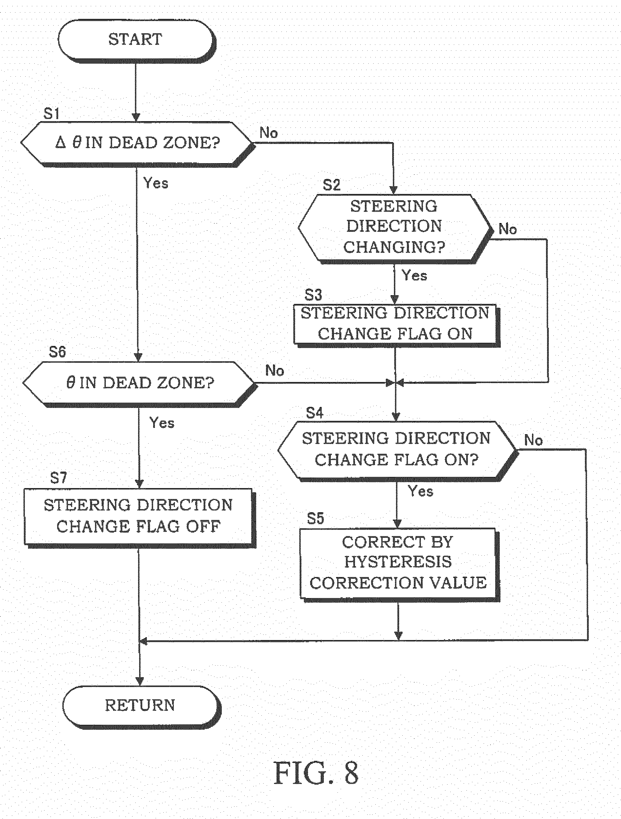

Since the hysteresis of the estimated steering torque occurs after a point of time when the steering direction changes, the estimated steering torque is corrected by the hysteresis correction value only after the point of time when the steering direction is changed. Accordingly, a procedure of determining whether or not to correct the estimated steering torque by the hysteresis correction value is described below with reference to FIG. 8. The procedure shown in FIG. 8 is performed by the motor control unit 31.

In Step 1, a steering angle velocity Δ0 calculated on the basis of the detection result of the steering angle sensor 15 is obtained and whether or not the current steering angle velocity Δθ is in a dead zone is determined. If it is determined that the current steering angle velocity Δθ is not in the dead zone, the steering angle is being changed and advance is made to Step 2. The dead zone of the steering angle velocity Δθ is set at a minute velocity enough to prevent erroneous determination due to a detection error of the steering angle sensor 15.

In Step 2, whether or not the steering direction has been changed is determined on the basis of the detection result of the steering angle sensor 15. If it is determined that the steering direction has been changed, advance is made to Step 4 after a steering direction change flag is set ON in Step 3. If it is determined that the steering direction has not been changed, advance is made to Step 4 without setting the steering direction change flag ON in Step 3.

In Step 4, whether or not the steering direction change flag is ON is determined. If it is determined that the steering direction change flag is ON, advance is made to Step 5 and the estimated steering torque is corrected by the hysteresis correction value. Specifically, the hysteresis correction value corresponding to the current steering angle is obtained with reference to the map of the hysteresis correction value shown in FIG. 7. If the hysteresis correction value is set according to a vehicle speed, the hysteresis correction value corresponding to the current vehicle speed is obtained on the basis of a detection result of a vehicle speed sensor (not shown).

If it is determined in Step 4 that the steering direction change flag is not ON, the steering direction has not been changed after the steering wheel 1 was steered from the neutral position and the process is finished without correcting the estimated steering torque by the hysteresis correction value in Step 5.

If it is determined in Step 1 that the steering angle velocity Δ0 is in the dead zone, the steering angle is constant and advance is made to Step 6. In Step 6, whether or not the current steering angle θ is in a dead zone is determined on the basis of the detection result of the steering angle sensor 15. If it is determined that the steering angle θ is not in the dead zone, the steering wheel 1 is being turned at a fixed steering angle and advance is made to Step 4. The dead zone of the steering angle θ is set at a minute steering angle enough to prevent erroneous determination due to the detection error of the steering angle sensor 15.

The processing in Step 4 is as described above.

If it is determined in Step 6 that the steering angle θ is in the dead zone, the steering wheel 1 is at the neutral position, the steering direction change flag is set OFF in Step 7 and the process is finished. As just described, if both the steering angle velocity Δθ and the steering angle θ are in the dead zone, the process is finished without correcting the estimated steering torque by the hysteresis correction value.

The above process is repeatedly performed in every predetermined calculation cycle while an ignition switch of a vehicle is ON.

According to the above third embodiment, the following effects are exhibited.

The correction value setting unit 34 also sets the hysteresis correction value for correcting the hysteresis of the estimated steering torque estimated by the steering torque estimation unit 35. Thus, the corrected steering torque calculated at the time of breakdown of the torque sensor 12 matches the steering torque detected by the torque sensor 12 with high accuracy. Therefore, the determination accuracy of the steering intervention operation by the intervention determination unit 33 when the torque sensor 12 breaks down during the automatic steering can be further enhanced.

In the above third embodiment, the hysteresis correction value (see FIG. 7) and the correction value (see FIG. 4) due to the detection accuracy of the steering angle sensor 15 and the motor rotation angle sensor 10a and the like are separately set in the correction value setting unit 34. Instead of this, one correction value taking both correction values into account may be set in the correction value setting unit 34.

The correction value (see FIG. 4) due to the detection accuracy of the steering angle sensor 15 and the motor rotation angle sensor 10a and the like is desirably set by comparing the steering torque detected by the torque sensor 12 and the estimated steering torque estimated by the steering torque estimation unit 35 when the steering wheel 1 is turned from the neutral position, considering the hysteresis of the estimated steering torque.

The configurations, functions and effects of the embodiments of the present invention are summarized below.

The electric power steering device includes the steering shaft 7 configured to rotate according to the steering operation by the driver, the torsion bar 4 constituting a part of the steering shaft 7, the torque sensor 12 configured to detect the steering torque acting on the torsion bar 4, the electric motor 10 configured to selectively perform the steering assistance based on the detection result of the torque sensor 12 and the automatic steering based on the information outside the vehicle, the breakdown determination unit 32 configured to determine the breakdown of the torque sensor 12, and the intervention determination unit 33 configured to determine the steering intervention operation by the driver when the torque sensor 12 breaks down during the automatic steering, and the automatic steering is released when the intervention determination unit 33 determines that the steering intervention operation has been performed.

In this configuration, the steering intervention operation by the driver is determined by the intervention determination unit 33 when the torque sensor 12 breaks down during the automatic steering. Thus, even if the torque sensor 12 breaks down during the automatic steering, the automatic steering can be continued.

Further, the intervention determination unit 33 determines the steering intervention operation on the basis of the target control value of the automatic steering.

Further, the intervention determination unit 33 determines the steering intervention operation on the basis of the change amount of the target control value of the automatic steering.

Further, the target control value is the target control current for controlling the drive of the electric motor 10 or the target steering angle.

The electric power steering device further includes the steering angle sensor 15 configured to obtain the steering angle associated with the steering operation. The intervention determination unit 33 determines that the steering intervention operation has been performed when the deviation between the target steering angle of the automatic steering and the steering angle obtained by the steering angle obtaining unit becomes equal to or larger than the predetermined value.

In these configurations, the steering intervention operation can be accurately determined since the steering intervention operation is determined on the basis of the target control value of the automatic steering,

The electric power steering device further includes the motor rotation angle sensor 10a configured to obtain the rotation angle of the electric motor 10, the steering torque estimation unit 35 configured to calculate the estimated steering torque on the basis of the result obtained by the steering angle sensor 15 and the result obtained by the motor rotation angle sensor 10a, and the correction value setting unit 34 configured to set the correction value of the estimated steering torque on the basis of the comparison between the steering torque detected by the torque sensor 12 and the estimated steering torque calculated by the steering torque estimation unit 35 when the torque sensor 12 is in the normal state. The intervention determination unit 33 determines the steering intervention operation on the basis of the corrected steering torque obtained by correcting the estimated steering torque calculated by the steering torque estimation unit 35 by the correction value.

Further, the correction value includes the hysteresis correction value for correcting the hysteresis of the estimated steering torque.

In these configurations, the steering intervention operation is determined on the basis of the corrected estimated steering torque at the time of breakdown of the torque sensor 12. Since that corrected estimated steering torque substantially matches the steering torque detected by the torque sensor 12, the steering intervention operation at the time of breakdown of the torque sensor 12 can be accurately determined. Further, since the assist control based on the corrected estimated steering torque is executed even after the steering intervention operation is determined and the automatic steering is released at the time of breakdown of the torque sensor 12, the safe operation of the vehicle can be continued.

Embodiments of this invention were described above, but the above embodiments are merely examples of applications of this invention, and the technical scope of this invention is not limited to the specific constitutions of the above embodiments.

For example, the pinion gear 3a formed on the lower part of the output shaft 3 is meshed with the rack gear 5a formed on the rack shaft 5 in the above embodiments. Instead of this, a pinion shaft to be meshed with the rack gear 5a may be provided separately from the output shaft 3 and the output shaft 3 and the pinion shaft may be coupled via a universal joint.

Further, in the above embodiments, a drive force of the electric motor 10 is applied to the output shaft 3 via the speed reducer 11. Instead of this, the drive force of the electric motor 10 may be applied to the rack shaft 5 via a speed reducer including pulleys and a belt (belt drive method) or the drive force of the electric motor 10 may be directly applied to the rack shaft 5 without via a speed reducer (direct drive method). As just described, the electric motor 10 is for applying a torque to a steering system.

This application claims priority based on Japanese Patent Application No.2015-207402 filed with the Japan Patent Office on October 21, 2015, the entire contents of which are incorporated into this specification.

## Claims

1. An electric power steering device, comprising:
a steering shaft configured to rotate according to a steering operation by a driver;
a torsion bar constituting a part of the steering shaft;
a torque sensor configured to detect a steering torque acting on the torsion bar;
an electric motor configured to selectively perform steering assistance based on a detection result of the torque sensor and automatic steering based on information outside a vehicle;
a breakdown determination unit configured to determine the breakdown of the torque sensor; and
an intervention determination unit configured to determine a steering intervention operation by the driver when the torque sensor breaks down during the automatic steering, wherein
the automatic steering is released when the intervention determination unit determines that the steering intervention operation has been performed.

2. The electric power steering device according to claim 1, wherein:
the intervention determination unit determines the steering intervention operation on the basis of a target control value of the automatic steering.

3. The electric power steering device according to claim 2, wherein:
the intervention determination unit determines the steering intervention operation on the basis of a change amount of the target control value of the automatic steering.

4. The electric power steering device according to claim 2, wherein:
the target control value is a target control current for controlling the drive of the electric motor or a target steering angle.

5. The electric power steering device according to claim 1, further comprising:
a steering angle obtaining unit configured to obtain a steering angle associated with the steering operation;
wherein the intervention determination unit determines that the steering intervention operation has been performed when a deviation between a target steering angle of the automatic steering and the steering angle obtained by the steering angle obtaining unit becomes equal to or larger than a predetermined value.

6. The electric power steering device according to claim 1, further comprising:
a steering angle obtaining unit configured to obtain a steering angle associated with the steering operation;
a motor rotation angle obtaining unit configured to obtain a rotation angle of the electric motor;
a steering torque estimation unit configured to calculate an estimated steering torque on the basis of a result obtained by the steering angle obtaining unit and a result obtained by the motor rotation angle obtaining unit; and
a correction value setting unit configured to set a correction value of the estimated steering torque on the basis of a comparison between the steering torque detected by the torque sensor and the estimated steering torque calculated by the steering torque estimation unit when the torque sensor is in a normal state;
wherein the intervention determination unit determines the steering intervention operation on the basis of a corrected steering torque obtained by correcting the estimated steering torque calculated by the steering torque estimation unit using the correction value.

7. The electric power steering device according to claim 6, wherein:
the correction value includes a hysteresis correction value for correcting a hysteresis of the estimated steering torque.
